# EUROPEAN PATENT SPECIFICATION

(11) **EP 2 963 993 B1**
(45) Date of publication and mention of the grant of the patent: **01.01.2020**
(21) Application number: 14306043.2
(22) Date of filing: 30.06.2014
(51) Int. Cl.: H04W 88/08, H04W 92/04, H01Q 1/24, H01Q 21/24, H04B 7/0413, H04B 7/10, H04B 7/14

(54) **A method for wireless multiple-input multiple-output communication, and a central unit and a radio access unit therefor**
Verfahren zur drahtlosen Kommunikation mit mehreren Ein- und Ausgängen sowie eine zentrale Einheit und eine Funkzugriffseinheit dafür
Procédé de communication à entrées multiples et sorties multiples sans fil, unité centrale et unité d'accès radio correspondante

(43) Date of publication of application: 06.01.2016
(73) Proprietor: Alcatel Lucent, 91620 Nozay (FR)
(72) Inventor: Maier, Simone, 70435 Stuttgart (DE)
(74) Representative: DREISS Patentanwälte PartG mbB

(56) References cited:
- EP-A1- 2 393 317
- EP-A1- 2 720 429
- JP-A- 2005 348 332
- US-A1- 2003 109 236
- US-A1- 2007 218 910
- US-A1- 2012 082 044
- US-A1- 2012 276 892
- US-A1- 2013 142 136
- US-B1- 8 243 632

## Description

### Field of the invention

The invention relates to a method for wireless multiple-input multiple-output communication, and a central unit and a radio access unit adapted to perform said method.

### Background

Future mobile communication systems will rely on a so-called heterogeneous architecture comprising small cells and multiple-input multiple-output communication. To simplify the network planning, the deployment of small cells should be dictated by radio frequency considerations and capacity needs only, and not by access and availability of power and backhaul links. State-of-the-art base station concepts for small cells are composed of two completely separate units. The first unit generates and receives the signals exchanged between the base station and the user terminals. The second unit receives and generates the signals exchanged on the wireless backhaul link between the base station and the core network. The two units are connected via a base band interface using an Ethernet link. Both units not only have a significant power consumption because of the complex architecture and contain a lot of functionality, but also suffer from a high component count and related cost and size.

European patent application publication 2720429 describes a base station within a communication system having a remote unit and a central unit. The remote unit and the central unit communicate with each other by means of a data stream over an interface, which may be a wireless interface. The remote unit comprises means for identifying a recurring data pattern and means for replacing the recurring data pattern with a recurring data pattern identifier in the data stream. The central unit comprises means for identifying a recurring data pattern identifier in the data stream and means for replacing the recurring data pattern identifier with a recurring data pattern in the data stream.

European patent application publication 2393317 describes a wireless communication system comprising base stations that communicate with a terminal. Each of the base stations has antennas. Each of the base stations transmits a reference signal unique to each of the antennas which does not overlap with another antenna among the base stations at least in a vicinity thereof. The terminal selects antennas suitable for communication based on estimation of a received power of the reference signals for each of the antennas. The result of the selection is transmitted to each of the base stations, and each base station assigns the selected antennas to the terminal and notifies the terminal of a result of the assigning.

US-patent 8,243,632 describes the operation of two asymmetric wireless connections in parallel but in reverse directions between two nodes. One of the asymmetric wireless connections provides a high-data-rate forward link in one direction, while the other asymmetric wireless connection concurrently provides a high-data-rate forward link in the other direction. Lower-data-rate reverse links between the nodes may then be used to carry overhead control data or can be used to supplement the primary high-data-rate communication provided by the forward links.

US-patent application publication 2012/0082044 describes an apparatus and method for controlling a wireless feeder network used to couple access base stations of an access network with a communications network.

US-patent application publication 2012/0276892 relates to a hub base station capable of communicating with a plurality of remote network entities over a cellular communications network. The base station comprises a transmitter configured to transmit a plurality of distinct radio frequency beams towards a plurality of distinct directions for backhaul communications.

US-patent application publication 2003/0109236 describes a wireless transmitter comprising an Intermediate-Frequency (IF) signal generator that modulates input signals into those of an intermediate frequency band, signal distributors that distribute signals from the IF-signal generator, and a plurality of signal-transmission units that convert the signals distributed by the signal distributors into those of a radio frequency band. The converted radio signals are then transmitted.

JP-patent application publication 2005/348332 describes a transmitter converting an intermediate frequency signal obtained by frequency converting an input signal using a local oscillator signal into a transmit frequency signal and transmitting the transmit frequency signal to a receiver. The receiver frequency-converts the received transmit frequency signal into a further intermediate frequency signal while reproducing the local oscillation signal using a local oscillation signal reproducing circuit. The local oscillation signal reproducing circuit mixes the further intermediate frequency signal and the reproduced local oscillation signal, frequency-converts a result of mixing into an original input frequency and sends a result as an output signal to an output destination apparatus.

US 2013/0142136 A1 discloses a method and apparatus for adaptive wireless backhaul.

US 2007/0218910 A1 discloses dynamic beam steering of backhaul traffic.

### Summary

The object of the invention is thus to propose a method for wireless communication in a communication network with reduced CAPEX and OPEX costs and complexity and a high degree of local flexibility for the network planning.

In order to overcome the above-mentioned drawbacks, an autonomous radio access unit utilizing a wireless backhaul link to a central unit is envisaged in the embodiments of the invention. Possible frequency bands for the wireless backhaul link supporting said architecture are e.g. the unlicensed 60GHz band or the 75GHz and 85GHz bands.

Furthermore, in order to have an autonomous radio access unit having more than one receiver and transmitter respectively for the radio access link, and which is thus directly applicable to multiple-input multiple-output (MIMO) systems, as e.g. required for next generation networks, different data links between the central unit and user terminals via the radio access unit are established in the embodiments of the invention.

The simplest solution for a MIMO system, as e.g. a 2x2 MIMO system, would be to just use two radio access units next to each other and also identical parallel paths in the central unit. But as a radio access unit for reasons of cost and energy consumption shall mainly consist of a frequency conversion based on analog components, digital signal processing is not performed in the radio access unit. Therefore, the MIMO related signal processing needs to be done completely in the central unit. In order to support a MIMO configuration on the access side of the radio access unit supporting the users, independent data links on the backhaul side of the radio access unit are needed.

Such a backhaul link separation can be achieved by using different antenna polarizations.

If different antenna polarizations are used, then both signal streams generated in a baseband (BB) or intermediate frequency (IF) processing module in the central unit are upconverted separately to a preferably identical carrier frequency, but are then transmitted on the wireless backhaul link via different antennas, e.g. a vertically linear polarized antenna, and a horizontally linear polarized antenna. Also the separately received signals from the user terminals are transmitted on the backhaul via differently polarized antennas. It is also possible to share components between the different paths, i.e. use the same local oscillator (LO) source and a combined IF/BB processing entity in the central unit. Instead of two separate antennas, one combined antenna with 2 polarizations can also be used.

2x2 MIMO is the simplest configuration and can be done with all the proposed approaches. For more complex scenarios, e.g. 4x4 MIMO, using only different antenna polarizations is not possible anymore, since only 2 independent linear polarizations are available. For these more complex scenarios a combination of using different frequencies and antenna polarizations or a TDD based switching approach is feasible.

Preferred embodiments relate to a method according to claim 1, a central unit according to claim 7, and a radio access unit according to claim 8.

The invention is described in the following within the frame-work of 3GPP LTE (3GPP LTE = Third Generation Partnership Project Long Term Evolution), however the invention is not restricted to 3GPP LTE or enhancements thereof, but can in principle be applied in other networks that use a wireless access like e.g. in WiMAX networks (WiMAX = Worldwide Interoperability for Microwave Access).

Further developments of the invention can be gathered from the dependent claims and the following description.

### Brief description of the figures

In the following the invention will be explained further making reference to the attached drawings.

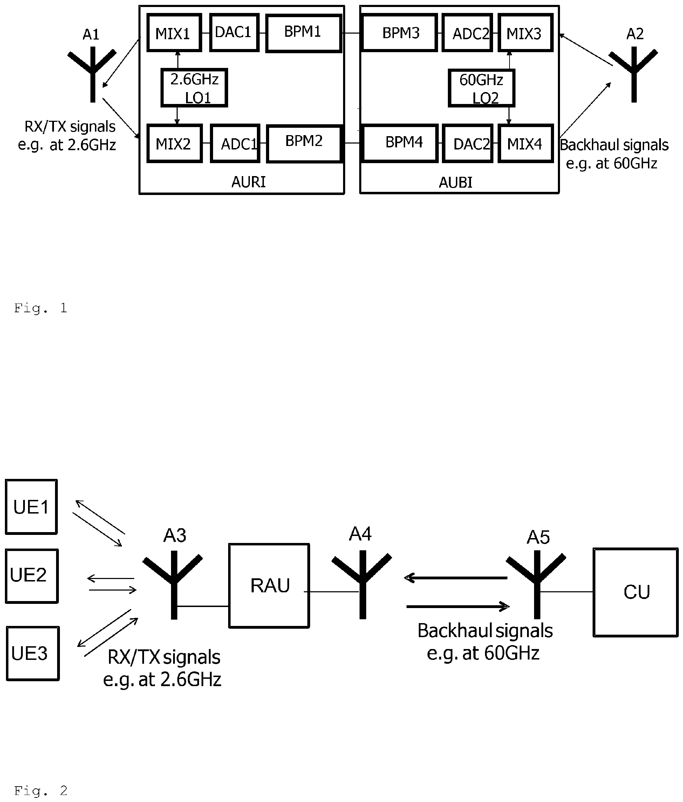

Fig. 1 schematically shows a first unit for wireless signal exchange with user terminals, which is connected via a baseband interface to a second unit for signal exchange via a wireless backhaul link with a core network.
Fig, 2 schematically shows a backhaul system architecture with a radio access unit for wireless signal exchange with user terminals, which is connected via a wireless link to a central unit for implementing embodiments of the invention.

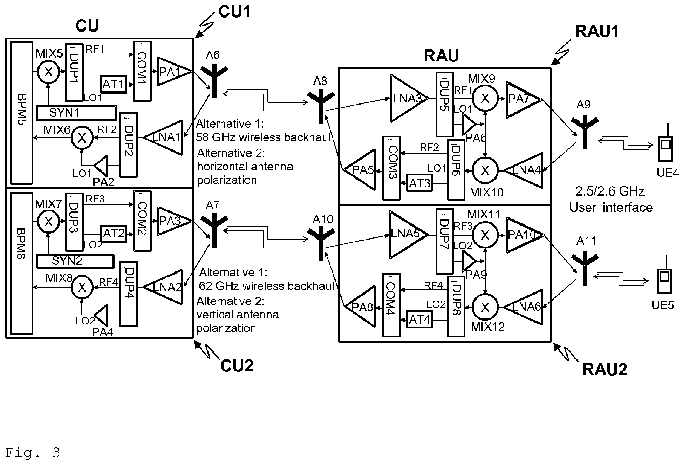

Fig. 3 schematically shows a backhaul system architecture with a radio access unit for 2x2 MIMO wireless signal exchange with user terminals, which is connected via 2 different wireless backhaul data links based on different antenna polarizations or different carrier frequencies to a central unit according to embodiments of the invention.

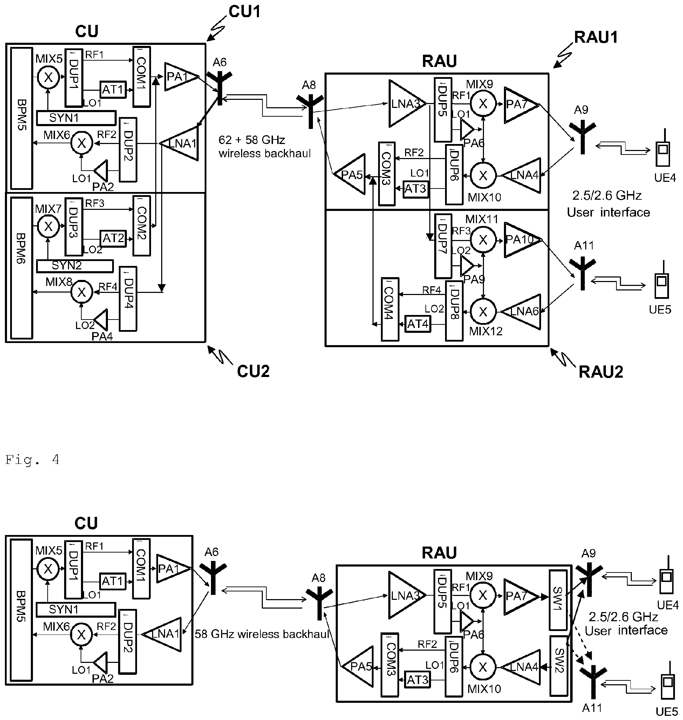

Fig. 4 schematically shows a backhaul system architecture with a radio access unit for 2x2 MIMO wireless signal exchange with user terminals, which is connected via 2 different wireless backhaul data links based on different carrier frequencies to a central unit using common antennas and common amplifiers according to an embodiment of the invention.
Fig. 5 schematically shows a backhaul system architecture with a radio access unit for 2x2 MIMO wireless signal exchange with user terminals, which is connected via 2 different wireless backhaul data links based on time division duplex to a central unit according to an embodiment of the invention.

### Description of the embodiments

Fig. 1 shows a first access unit AURI with a radio interface, and a second access unit AUBI with a wireless backhaul interface which are interconnected via a baseband interface according to the state-of-the-art.

The first access unit AURI comprises 2 mixers MIX1 and MIX2, an analogue to digital converter ADC1, a digital to analogue converter DAC1, a local oscillator LO1, and 2 baseband processing modules BPM1 and BPM2.

A first input of the first access unit AURI is connected to the first baseband processing module BPM1, which is in turn connected to the digital to analogue converter DAC1. The digital to analogue converter DAC1 is connected to the first mixer MIX1, which is in turn connected to a first output of the first access unit AURI.

A second input of the first access unit AURI is connected to the second mixer MIX2, which is in turn connected to the analogue to digital converter ADC1. The analogue to digital converter ADC1 is connected to the second baseband processing module BPM2, which is in turn connected to a second output of the first access unit AURI.

The local oscillator LO1 is connected both to the first and second mixer MIX1 and MIX2.

The second access unit AUBI comprises 2 mixers MIX3 and MIX4, an analogue to digital converter ADC2, a digital to analogue converter DAC2, a local oscillator LO2, and 2 baseband processing modules BPM3 and BPM4.

A first input of the second access unit AUBI is connected to the third mixer MIX3, which is in turn connected to the second analogue to digital converter ADC2. The second analogue to digital converter ADC2 is connected to the third baseband processing module BPM3, which is in turn connected to a first output of the second access unit AUBI.

A second input of the second access unit AUBI is connected to the fourth baseband processing module BPM4, which is in turn connected to the second digital to analogue converter DAC2. The second digital to analogue converter DAC2 is connected to the fourth mixer MIX4, which is in turn connected to a second output of the second access unit AUBI.

The second local oscillator LO2 is connected both to the third and fourth mixer MIX3 and MIX4.

The first and second mixer MIX1 and MIX2 of the first access unit AURI are connected to a first antenna A1 for transmitting and receiving of radio signals.

The third and fourth mixer MIX3 and MIX4 of the second access unit AUBI are connected to a second antenna A2 for transmitting and receiving of backhaul signals.

The first baseband processing module BPM1 of the first access unit AURI is connected via an Ethernet interface to the third baseband processing module BPM3 of the second access unit AUBI, and the second baseband processing module BPM2 of the first access unit AURI is connected via an Ethernet interface to the fourth baseband processing module BPM4 of the second access unit AUBI.

The baseband processing modules BPM1-BPM4 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

In the uplink direction, an analogue RF signal, e.g. at 2.5GHz, transmitted from a user terminal is received via the first antenna A1 by the first access unit AURI where it gets mixed down in the second mixer MIX2 using the first local oscillator LO1, converted from analogue to digital domain in the first analogue to digital converter ADC1, and processed in the baseband domain in the second baseband processing module BPM2. In the second baseband processing module BPM2, the digital signal on baseband level is demodulated and decoded, and then a processing on a Media Access Control (MAC) layer and a Radio Link Control (RLC) layer is performed, before finally on a Packet Data Convergence Protocol (PDCP) layer the signal is transmitted to the second access unit AUBI.

In the second access unit AUBI the signal gets also processed in the baseband domain in the fourth baseband processing module BPM4, in which the signal received on the Packet Data Convergence Protocol (PDCP) layer is processed on a Media Access Control (MAC) layer and a Radio Link Control (RLC) layer, before it is coded and modulated. Then, the signal is converted again into the analogue domain in the second digital to analogue converter DAC2, and then mixed up to the wireless backhaul transmit frequency, e.g. at 60GHz, in the fourth mixer MIX4 using the second local oscillator LO2 before the signal is finally radiated into the air via the second antenna A2 and will be received by the central unit, which is not depicted in fig. 1 for the sake of simplicity.

The downlink direction works similar. The central unit transmits an analogue backhaul signal, e.g. at 60.2GHz, which is received by the second access unit AUBI via the second antenna A2, where it gets mixed down in the third mixer MIX3 using the second local oscillator LO2, converted from analogue to digital domain in the second analogue to digital converter ADC2, and processed in the baseband domain in the third baseband processing module BPM3. In the third baseband processing module BPM3, the digital signal on baseband level is demodulated and decoded, and then a processing on a Media Access Control (MAC) layer and a Radio Link Control (RLC) layer is performed, before finally on a Packet Data Convergence Protocol (PDCP) layer the signal is transmitted to the first access unit AURI via an Ethernet interface.

This baseband signal is then processed in the baseband domain in the first baseband processing module BPM1, in which the signal received on the Packet Data Convergence Protocol (PDCP) layer is processed on a Media Access Control (MAC) layer and a Radio Link Control (RLC) layer, before it is coded and modulated. Then, the signal is converted again into the analogue domain in the first digital to analogue converter DAC1, and then mixed up to the radio transmit frequency, e.g. at 2.65GHz, in the first mixer MIX1 using the first local oscillator LO1 before the signal is finally radiated into the air via the first antenna A1 and will be received by a user terminal.

Due to the two completely separated first and second access units AURI and AUBI, this existing architecture is quite complex, has a high component count and therefore a high power consumption, and requires a big size and heavy weight. Furthermore it has a limited data rate. These characteristics are obviously in contrast to the requirements for a completely autonomous wireless cube or metro cell, especially the high power demand.

Fig. 2 schematically shows a backhaul system architecture with a radio access unit for wireless signal exchange with user terminals, which is connected via a wireless link to a central unit for implementing embodiments of the invention.

The communication network comprises a central unit CU, three antennas A3, A4 and A5, a radio access unit RAU, and three user terminals UE1, UE2, and UE3.

The central unit is connected both to a core network, which is not shown in fig. 2 for the sake of simplicity, and to the antenna A5 for a wireless backhaul link at e.g. 60GHz to the radio access unit RAU.

The radio access unit RAU is connected both to the antenna A3 for radio connection at e.g. 2.6GHz to the three user terminals UE1, UE2, and UE3, and to the antenna A4 for a wireless backhaul link at e.g. 60GHz to the central unit CU.

More detailed descriptions of the structure of the radio access unit RAU and the central unit CU for the use of multiple-input multiple-output communication according to embodiments of the invention are shown in figs. 3, 4, and 5 respectively, and will be described in the following.

As already mentioned above, a basic idea of the embodiments is to perform the MIMO related signal processing completely in the central unit, as the radio access unit for cost reasons shall mainly consist of a frequency conversion based on analog components, so that digital signal processing is not performed in the radio access unit. In order to support a MIMO configuration on the access side of the radio access unit supporting the users, independent data links on the backhaul side of the radio access unit are needed.

Such a backhaul link separation can be achieved by either using different antenna polarizations, or different carrier frequencies, which is possible for frequency division duplex (FDD) and time division duplex (TDD) systems, and which is depicted in figs. 3 and 4, or a time division duplex approach, which is only possible for TDD systems, and which is depicted in fig. 5.

Fig. 3 schematically shows a backhaul system architecture with a radio access unit for 2x2 MIMO wireless signal exchange with user terminals, which is connected via 2 different wireless backhaul data links based on different antenna polarizations or different carrier frequencies to a central unit according to embodiments of the invention.

The central unit CU comprises two central subunits CU1 and CU2 for establishing two different data links.

The first central subunit CU1 comprises a baseband processing module BPM5, two mixers MIX5 and MIX6, a local oscillator SYN1, two power amplifiers PA1 and PA2, a low noise amplifier LNA1, an attenuator AT1, two duplex filters DUP1 and DUP2, and a combiner COM1.

The second central subunit CU2 comprises a baseband processing module BPM6, two mixers MIX7 and MIX8, a local oscillator SYN2, two power amplifiers PA3 and PA4, a low noise amplifier LNA2, an attenuator AT2, two duplex filters DUP3 and DUP4, and a combiner COM2.

The radio access unit RAU comprises two radio access subunits RAU1 and RAU2 for establishing two different data links.

The first radio access subunit RAU1 comprises two mixers MIX9 and MIX10, three power amplifiers PA5-PA7, two low noise amplifiers LNA3-LNA4, an attenuator AT3, two duplex filters DUP5 and DUP6, and a combiner COM3.

The second radio access subunit RAU2 comprises two mixers MIX11 and MIX12, three power amplifiers PA8-PA10, two low noise amplifiers LNA5-LNA6, an attenuator AT4, two duplex filters DUP7 and DUP8, and a combiner COM4.

For establishing a first data link for the 2x2 MIMO wireless signal exchange with user terminals, data streams are transmitted between the first central subunit CU1 and the user terminal UE4 via the first radio access subunit RAU1, which will be described in the following in detail.

The first central subunit CU1 receives via a backbone interface, which is not depicted in fig. 3 for the sake of simplicity, from a core network a downlink signal stream which shall be transmitted to the user terminal UE4. The downlink signal stream is coded and modulated, and then upconverted to an intermediate frequency signal stream with a carrier frequency of e.g. 2.6 GHz in the baseband processing module BPM5.

Then, the intermediate frequency signal stream is upconverted in the mixer MIX5 using a local oscillator signal LO1 from the local oscillator SYN1 at e.g. 58 GHz. The output signal stream of the mixer MIX5 consists of the wanted radio frequency signal stream RF1 at 60.6 GHz, the local oscillator signal stream LO1 at 58 GHz, and an image signal stream at 55.4 GHz. The output signal stream of the mixer MIX5 is sent to the duplex filter DUP1, and the radio frequency signal stream RF1 is available at one output port and the local oscillator signal stream LO1 on the other output port of the duplex filter DUP1. The local oscillator signal stream LO1 is suppressed to a power level of the radio frequency signal stream RF1, or slightly below the power level of the radio frequency signal stream RF1 in the attenuator AT1.

The radio frequency signal stream RF1 and the local oscillator signal stream LO1 are combined in the combiner COM1, and amplified to the wanted transmit power level in the power amplifier PA1, before the radio frequency signal stream RF1 at 60.6 GHz and the local oscillator signal stream LO1 at 58 GHz are transmitted to the first radio access subunit RAU1 via an antenna A6 and a wireless backhaul link.

The first radio access subunit RAU1 receives the local oscillator signal stream LO1 and the radio frequency signal stream RF1 transmitted from the first central subunit CU1 via an antenna A8.

The local oscillator signal stream LO1 and the radio frequency signal stream RF1 are amplified in the low noise amplifier LNA3, before they are separated in the duplex filter DUP5.

The radio frequency signal stream RF1 is fed into an RF port of the mixer MIX9, and the local oscillator signal stream LO1 is amplified in the power amplifier PA6, before it is split up into 2 paths.

In a first path, the local oscillator signal stream LO1 is fed into a local oscillator port of the mixer MIX9 for downconversion.

In a second path, the local oscillator signal stream LO1 is fed into a local oscillator port of the mixer MIX10 for upconversion.

The radio frequency signal stream RF1 gets downconverted in the mixer MIX9 to an intermediate frequency signal stream with a carrier frequency of 2.6 GHz, and amplified in an amplifier PA7 before it gets radiated via an antenna A9 to the user terminal UE4.

In the uplink direction, an intermediate frequency signal stream e.g. at 2.5 GHz from the user terminal UE4 received in the first radio access subunit RAU1 via the antenna A9 is amplified in the low noise amplifier LNA4 to an appropriate level for usage of an intermediate frequency signal stream in the mixer MIX10 for upconversion.

The mixer MIX10 uses the received local oscillator signal stream LO1 at 58GHz from the first central subunit CU1 also as local oscillator signal stream for an upconversion of the intermediate frequency signal to the further radio frequency signal stream RF2 at 60.5 GHz.

In the duplex filter DUP6 after the mixer MIX10, the local oscillator signal stream LO1 and the further radio frequency signal stream RF2 are separated, so that the further radio frequency signal stream RF2 is available at one output port and the local oscillator signal stream LO1 on the other output port of the duplex filter DUP6. The local oscillator signal stream LO1 is suppressed to a power level of the further radio frequency signal stream RF2, or slightly below the power level of the further radio frequency signal stream RF2 in the attenuator AT3.

The further radio frequency signal stream RF2 and the local oscillator signal stream LO1 are combined in the combiner COM3, and amplified to the wanted transmit power level in the power amplifier PA5, before the further radio frequency signal stream RF2 at 60.5 GHz and the local oscillator signal stream LO1 at 58 GHz are transmitted to the first central unit CU1 via the antenna A8 and the wireless backhaul link.

The first central unit CU1 receives the local oscillator signal stream LO1 and the further radio frequency signal stream RF2 transmitted from the first radio access subunit RAU1 via the antenna A6.

The local oscillator signal stream LO1 and the further radio frequency signal stream RF2 are amplified in the low noise amplifier LNA1, before they are separated in the duplex filter DUP2.

The further radio frequency signal stream RF2 is fed into an RF port of the mixer MIX6, and the local oscillator signal stream LO1 is amplified in the power amplifier PA2, before it is fed into a local oscillator port of the mixer MIX6 for downconversion.

The further radio frequency signal stream RF2 gets downconverted in the mixer MIX6 to an intermediate frequency signal stream with a carrier frequency of 2.5 GHz, before the intermediate frequency signal stream comprising the data is further processed in the base band domain in the baseband processing module BPM5.

For establishing a second data link for the 2x2 MIMO wireless signal exchange with user terminals, data streams are transmitted between the second central subunit CU2 and the user terminal UE5 via the second radio access subunit RAU2, which will be described in the following.

The internal structure of the second central subunit CU2 corresponds to the internal structure of the first central subunit CU1, and the internal structure of the second radio access subunit RAU2 corresponds to the internal structure of the first radio access subunit RAU1. Thus, in the following only the differences compared to the first data link described above will be explained.

In a first alternative of the embodiment, different carrier frequencies are used for the transmission of wireless backhaul signal streams between the first central subunit CU1 and the first radio access subunit RAU1, and between the second central subunit CU2 and the second radio access subunit RAU2.

Thus, an intermediate frequency signal stream generated in the baseband processing module BPM6 is upconverted in the mixer MIX7 using a local oscillator signal LO2 from the local oscillator SYN2 at e.g. 62 GHz. The output signal stream of the mixer MIX7 comprises the wanted radio frequency signal stream RF3 at 64.6 GHz and the local oscillator signal stream LO2 at 62 GHz, which are both transmitted from an antenna A7 to the second radio access subunit RAU2 via the wireless backhaul link and an antenna A10.

In the second radio access subunit RAU2, the radio frequency signal stream RF3 at 64.6 GHz is downconverted using the local oscillator signal stream LO2 at 62 GHz in the mixer MIX11 to an intermediate frequency signal stream with a carrier frequency of 2.6 GHz, and amplified in the amplifier PA10 before it gets radiated via an antenna A11 to the user terminal UE5.

In the uplink direction, an intermediate frequency signal stream e.g. at 2.5 GHz from the user terminal UE5 received in the second radio access subunit RAU2 via the antenna A11 is upconverted in the mixer MIX12 using the received local oscillator signal stream LO2 at 62 GHz from the second central subunit CU2 to a further radio frequency signal stream RF4 at 64.5 GHz.

The further radio frequency signal stream RF4 at 64.5 GHz and the local oscillator signal stream LO2 at 62 GHz are transmitted to the second central unit CU2 via the antenna A10 and a wireless backhaul link.

The second central unit CU2 receives the local oscillator signal stream LO2 and the further radio frequency signal stream RF4 transmitted from the second radio access subunit RAU2 via the antenna A7.

The further radio frequency signal stream RF4 gets downconverted in the mixer MIX8 to an intermediate frequency signal stream with a carrier frequency of 2.5 GHz, before the intermediate frequency signal stream comprising the data is further processed in the base band domain in the baseband processing module BPM6.

In a second alternative of the embodiment, the same carrier frequencies, but different antenna polarizations are used for the transmission of wireless backhaul signal streams between the first central subunit CU1 and the first radio access subunit RAU1, and between the second central subunit CU2 and the second radio access subunit RAU2.

Thus, an intermediate frequency signal stream generated in the baseband processing module BPM6 is upconverted in the mixer MIX7 using a local oscillator signal LO2 from the local oscillator SYN2 at e.g. 58 GHz and thus having the same frequency as the local oscillator signal LO1 from the local oscillator SYN1 in the first central unit CU1. As an alternative, a common local oscillator can be used, and the output signal of said common local oscillator can be split in order to generate the first local oscillator signal LO1 and the second local oscillator signal LO2. The output signal stream of the mixer MIX7 comprises the wanted radio frequency signal stream RF3 at 60.6 GHz and the local oscillator signal stream LO2 at 58 GHz, which are both transmitted from an antenna A7 to the second radio access subunit RAU2 via a wireless backhaul link and an antenna A10. The antennas A7 and A10 for transmission between the second central subunit CU2 and the second radio access subunit RAU2 shall have a polarization which is different from the polarization of the antennas A6 and A8 for transmission between the first central subunit CU1 and the first radio access subunit RAU1. If e.g. the antennas A6 and A8 have a horizontal polarization, then the antennas A7 and A10 have a vertical polarization or vice versa.

In the second radio access subunit RAU2, the radio frequency signal stream RF3 at 60.6 GHz is downconverted using the local oscillator signal stream LO2 at 58 GHz in the mixer MIX11 to an intermediate frequency signal stream with a carrier frequency of 2.6 GHz, and amplified in the amplifier PA10 before it gets radiated via an antenna A11 to the user terminal UE5.

In the uplink direction, an intermediate frequency signal stream e.g. at 2.5 GHz from the user terminal UE5 received in the second radio access subunit RAU2 via the antenna A11 is upconverted in the mixer MIX12 using the received local oscillator signal stream LO2 at 58 GHz from the second central subunit CU2 to a further radio frequency signal stream RF4 at 60.5 GHz.

The further radio frequency signal stream RF4 at 60.5 GHz and the local oscillator signal stream LO2 at 58 GHz are transmitted to the second central unit CU2 via the antenna A10 and the wireless backhaul link.

The second central unit CU2 receives the local oscillator signal stream LO2 and the further radio frequency signal stream RF4 transmitted from the second radio access subunit RAU2 via the antenna A7.

The further radio frequency signal stream RF4 gets downconverted in the mixer MIX8 to an intermediate frequency signal stream with a carrier frequency of 2.5 GHz, before the intermediate frequency signal stream comprising the data is further processed in the base band domain in the baseband processing module BPM6.

In an alternative of the embodiments, the radio frequency signal stream RF1 transmitted from the antenna A9 will not only be received by the user terminal UE4 but also by the user terminal UE5, and also the radio frequency signal stream RF3 transmitted from the antenna A11 will not only be received by the user terminal UE4 but also by the user terminal UE5. Also both user terminals UE4 and UE5 in uplink will transmit an intermediate frequency signal stream to both radio access subunits RAU1 and RAU2. So it is possible in 2x2 MIMO that the user terminal UE4 or UE5 uses 2 signal streams for higher data transmissions.

The baseband processing modules BPM5 and BPM6 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

Fig. 4 schematically shows a backhaul system architecture with a radio access unit for 2x2 MIMO wireless signal exchange with user terminals, which is connected via 2 different wireless backhaul data links based on different carrier frequencies to a central unit using common antennas and common amplifiers according to an embodiment of the invention.

The structure of the backhaul system architecture according to the embodiment depicted in fig. 4 corresponds basically to the embodiment depicted in fig. 3, so that in the following only the differences compared to the embodiment depicted in fig. 3 are described.

The central unit CU comprises two central subunits CU1 and CU2 for establishing two different data links.

The first central subunit CU1 corresponds to the first central subunit CU1 depicted in fig. 3 and comprises a baseband processing module BPM5, two mixers MIX5 and MIX6, a local oscillator SYN1, two power amplifiers PA1 and PA2, a low noise amplifier LNA1, an attenuator AT1, two duplex filters DUP1 and DUP2, and a combiner COM1.

The second central subunit CU2 comprises a baseband processing module BPM6, two mixers MIX7 and MIX8, a local oscillator SYN2, a power amplifier PA4, an attenuator AT2, two duplex filters DUP3 and DUP4, and a combiner COM2. Thus compared to the second central subunit CU2 depicted in fig. 3, the second central subunit CU2 does not comprise the power amplifier PA3, as in the embodiment depicted in fig. 4 downlink signal streams processed in the second central subunit CU2 are amplified in the power amplifier PA1 of the first central subunit CU1 before transmission from the antenna A6 to the first radio access unit RAU1 via the antenna A8. Furthermore, compared to the second central subunit CU2 depicted in fig. 3, the second central subunit CU2 does not comprise the low noise amplifier LNA2, as in the embodiment depicted in fig. 4 uplink signal streams are received at the antenna A6 and amplified in the low noise amplifier LNA1 of the first central subunit CU1 before processing in the second central subunit CU2.

The radio access unit RAU comprises two radio access subunits RAU1 and RAU2 for establishing two different data links.

The first radio access subunit RAU1 corresponds to the first radio access subunit RAU1 depicted in fig. 3 and comprises two mixers MIX9 and MIX10, three power amplifiers PA5-PA7, two low noise amplifiers LNA3-LNA4, an attenuator AT3, two duplex filters DUP5 and DUP6, and a combiner COM3.

The second radio access subunit RAU2 comprises two mixers MIX11 and MIX12, two power amplifiers PA9-PA10, a low noise amplifier LNA6, an attenuator AT4, two duplex filters DUP7 and DUP8, and a combiner COM4. Thus compared to the second radio access subunit RAU2 depicted in fig. 3, the second radio access subunit RAU2 does not comprise the power amplifier PA8, as in the embodiment depicted in fig. 4 uplink signal streams processed in the second radio access subunit RAU2 are amplified in the power amplifier PA5 of the first radio access subunit RAU1 before transmission from the antenna A8 to the first central unit CU1 via the antenna A6. Furthermore, compared to the second radio access subunit RAU2 depicted in fig. 3, the second radio access subunit RAU2 does not comprise the low noise amplifier LNA5, as in the embodiment depicted in fig. 4 downlink signal streams are received at the antenna A8 and amplified in the low noise amplifier LNA3 of the first radio access subunit RAU1 before processing in the second radio access subunit RAU2.

For establishing a first data link for the 2x2 MIMO wireless signal exchange with user terminals, data streams are transmitted between the first central subunit CU1 and the user terminal UE4 via the first radio access subunit RAU1 as depicted in fig. 3 and described above.

For establishing a second data link for the 2x2 MIMO wireless signal exchange with user terminals, data streams are transmitted between the second central subunit CU2 and the user terminal UE5 via the second radio access subunit RAU2 using power amplifiers PA1 and PA5, low noise amplifiers LNA1 and LNA3, and antennas A6 and A8 which are commonly used for establishing the first and the second data link.

Different carrier frequencies are used for the transmission of wireless backhaul signal streams between the first central subunit CU1 and the first radio access subunit RAU1, and between the second central subunit CU2 and the second radio access subunit RAU2.

Thus, an intermediate frequency signal stream generated in the baseband processing module BPM6 is upconverted in the mixer MIX7 using a local oscillator signal stream LO2 from the local oscillator SYN2 at e.g. 62 GHz. The output signal stream of the mixer MIX7 comprises the wanted radio frequency signal stream RF3 at 64.6 GHz and the local oscillator signal stream LO2 at 62 GHz, which are combined in the combiner COM2, amplified in the power amplifier PA1, and transmitted from the antenna A6 to the first radio access subunit RAU1 via a wireless backhaul link and the antenna A8.

In the first radio access subunit RAU1, the radio frequency signal stream RF3 at 64.6 GHz and the local oscillator signal stream LO2 at 62 GHz are amplified in the low noise amplifier LNA3, and transmitted to the duplex filter DUP7 in the second radio access subunit RAU2. In the duplex filter DUP7, the radio frequency signal stream RF3 at 64.6 GHz and the local oscillator signal stream LO2 at 62 GHz are separated. The radio frequency signal stream RF3 at 64.6 GHz is downconverted using the local oscillator signal stream LO2 at 62 GHz in the mixer MIX11 to an intermediate frequency signal stream with a carrier frequency of 2.6 GHz, and amplified in the amplifier PA10 before it gets radiated via an antenna A11 to the user terminal UE5.

In the uplink direction, an intermediate frequency signal stream e.g. at 2.5 GHz from the user terminal UE5 received in the second radio access subunit RAU2 via the antenna A11 is upconverted in the mixer MIX12 using the received local oscillator signal stream LO2 at 62 GHz from the second central subunit CU2 to a further radio frequency signal stream RF4 at 64.5 GHz.

The further radio frequency signal stream RF4 at 64.5 GHz and the local oscillator signal stream LO2 at 62 GHz are combined in the combiner COM4, amplified in the power amplifier PA5, and transmitted to the first central unit CU1 via the antenna A8 and a wireless backhaul link.

The local oscillator signal stream LO2 and the further radio frequency signal stream RF4 are received at the antenna A6, and amplified in the low noise amplifier LNA1.

The further radio frequency signal stream RF4 at 64.5 GHz gets downconverted in the mixer MIX8 to an intermediate frequency signal stream with a carrier frequency of 2.5 GHz, before the intermediate frequency signal stream comprising the data is further processed in the base band domain in the baseband processing module BPM6.

In an alternative of the embodiment, the radio frequency signal stream RF1 transmitted from the antenna A9 will not only be received by the user terminal UE4 but also by the user terminal UE5, and also the radio frequency signal stream RF3 transmitted from the antenna A11 will not only be received by the user terminal UE4 but also by the user terminal UE5. Also both user terminals UE4 and UE5 in uplink will transmit an intermediate frequency signal stream to both radio access subunits RAU1 and RAU2. So it is possible in 2x2 MIMO that the user terminal UE4 or UE5 uses 2 signal streams for higher data transmissions.

Fig. 5 schematically shows a backhaul system architecture with a radio access unit for 2x2 MIMO wireless signal exchange with user terminals, which is connected via 2 different wireless backhaul data links based on time division duplex to a central unit according to an embodiment of the invention.

This embodiment for establishing 2 different data links based on time division duplex offers the lowest hardware component count. Due to the time division duplexing, only one hardware path is used on the backhaul link and in the radio access unit which is then switched to the different access antennas, both for receive and transmit direction.

For establishing 2 data links for the 2x2 MIMO wireless signal exchange with user terminals, data streams are transmitted between the central unit CU and the user terminals UE4 and UE5 via the radio access unit RAU using 2 switches SW1 and SW2 for switching between the access antennas A9 and A11, which will be described in the following.

The internal structure of the central unit CU corresponds to the internal structure of the first central subunit CU1 depicted in fig. 3 and described above. The internal structure of the radio access unit RAU corresponds to the internal structure of the first radio access subunit RAU1 depicted in fig. 3 and described above, with the difference, that the output of the power amplifier PA7 is connected to the switch SW1 for switching between the antenna A9 and the antenna A11, and that the input of the low noise amplifier LNA4 is connected to the switch SW2 for switching between the antenna A9 and the antenna A11. Thus, in the following only the differences compared to the first data link depicted in fig. 3 and described above will be explained.

An intermediate frequency signal stream at 2.6 GHz generated in the baseband processing module BPM5 is upconverted in the mixer MIX5 using a local oscillator signal LO1 from the local oscillator SYN1 at e.g. 58 GHz. The output signal stream of the mixer MIX5 comprises the wanted radio frequency signal stream RF1 at 60.6 GHz and the local oscillator signal stream LO1 at 58 GHz, which are both transmitted from an antenna A6 to the radio access unit RAU via a wireless backhaul link and the antenna A8.

In the radio access unit RAU, the radio frequency signal stream RF1 at 60.6 GHz is downconverted using the local oscillator signal stream LO1 at 58 GHz in the mixer MIX9 to an intermediate frequency signal stream with a carrier frequency of 2.6 GHz, and amplified in the amplifier PA7. In the switch SW1, depending on the time interval in which the intermediate frequency signal stream is received, on an indicator of the intermediate frequency signal stream, or on a timer or a counter with fixed or variable starting points and durations, said intermediate frequency signal stream is either switched to the antenna A9 for transmission to the user terminal UE4, or switched to the antenna A11 for transmission to the user terminal UE5. In an alternative of the embodiment, the transmitter can be completely switched off in order not to disturb the receiver. Thus, the switch SW1 can also have 3 positions: Connected to antenna A9, connected to antenna A11, or completely disconnected from antenna A9 and A11. In the last case, the switch SW1 is preferably connected to ground.

In the uplink direction, depending on the time interval in which the intermediate frequency signal stream is received at the switch SW2, on an indicator of the intermediate frequency signal stream, or on a timer or a counter with fixed or variable starting points and durations in the switch SW2, the switch SW2 is either connected to the antenna A9, or to the antenna A11 for receiving an intermediate frequency signal stream e.g. at 2.5 GHz from the user terminal UE4 or the user terminal UE5 respectively. However, in TDD downlink and uplink can also have the same frequency, so that the intermediate frequency signal stream can also have a frequency of 2.6 GHz. The intermediate frequency signal stream is upconverted in the mixer MIX10 using the received local oscillator signal stream LO1 at 58 GHz from the central unit CU to a further radio frequency signal stream RF2 at 60.5 GHz.

The further radio frequency signal stream RF2 at 60.5 GHz and the local oscillator signal stream LO1 at 58 GHz are transmitted to the central unit CU via the antenna A8 and a wireless backhaul link.

The central unit CU receives the local oscillator signal stream LO1 and the further radio frequency signal stream RF2 transmitted from the radio access subunit RAU via the antenna A6.

The further radio frequency signal stream RF2 gets downconverted in the mixer MIX6 to an intermediate frequency signal stream with a carrier frequency of 2.5 GHz, before the intermediate frequency signal stream comprising the data is further processed in the base band domain in the baseband processing module BPM5.

In an alternative of the embodiment, the radio frequency signal stream RF1 transmitted from the antenna A9 or the antenna A11 will be received by both user terminals UE4 and UE5. Also both user terminals UE4 and UE5 in uplink will transmit an intermediate frequency signal stream to the antenna A9 or A11. So it is possible in 2x2 MIMO that the user terminal UE4 or UE5 uses 2 signal streams for higher data transmissions.

According to alternatives of the embodiment depicted in fig. 5, a synchronization of transmitting and receiving for time division duplex between the radio access unit RAU and the user terminals UE4 and UE5 is achieved by at least one of a group of synchronization signals sent from the central unit CU to the radio access unit RAU, power detection in the radio access unit RAU of wireless backhaul signals sent from the central unit CU, and power detection in the radio access unit RAU of wireless access signals sent from the user terminals UE4 or UE5.

## Claims

1. A method for wireless multiple-input multiple-output communication in a communication network comprising at least one central unit (CU) and at least one radio access unit (RAU) for wireless connection with at least one user terminal (UE4, UE5), wherein the at least one central unit (CU) is connected to the at least one radio access unit (RAU) by at least one wireless backhaul connection, the method comprising establishing different data links (RF1-RF4) between the at least one central unit (CU) and the at least one user terminal (UE4, UE5) via the at least one radio access unit (RAU) for said wireless multiple-input multiple-output communication by transmitting wireless backhaul signals between the at least one central unit (CU) and the at least one radio access unit (RAU) with different polarizations, wherein said wireless backhaul signals of the different data links (RF1-RF4) are transmitted between the at least one central unit (CU) and the at least one radio access unit (RAU) on identical carrier frequencies.

2. A method according to claim 1, wherein
• said wireless backhaul signals of the different data links (RF1-RF4) are transmitted between the at least one central unit (CU) and the at least one radio access unit (RAU) using common antennas (A6, A8),
• and the method further comprises switching between different antennas (A9, A11) for transmitting and between different antennas (A9, A11) for receiving of the at least one radio access unit (RAU) used for time division duplex of the wireless connection with the at least one user terminal (UE4, UE5).

3. A method according to claim 2, wherein a switching between different antennas (A9, A11) for transmitting and between different antennas (A9, A11) for receiving of the at least one radio access unit (RAU) used for time division duplex of the wireless connection with the at least one user terminal (UE4, UE5) is dependent on a counter or a timer.

4. A method according to any of the preceding claims, the method further comprising
• transmitting a local oscillator signal (LO1, LO2) and wireless backhaul signals (RF1, RF3) from the at least one central unit (CU) to the at least one radio access unit (RAU),
• separating said local oscillator signal (LO1, LO2) and the wireless backhaul signals (RF1, RF3) received via said at least one wireless backhaul connection in the at least one radio access unit (RAU), and
• using the local oscillator signal (LO1, LO2) for downconversion of the wireless backhaul signals (RF1, RF3) in the at least one radio access unit (RAU).

5. A method according to claim 4, wherein the method further comprises, after separation from the wireless backhaul signals (RF1, RF3), splitting the local oscillator signal (LO1, LO2), and using one part of the local oscillator signal (LO1, LO2) for upconversion of wireless access signals sent from the at least one user terminal (UE4, UE5) to the at least one radio access unit (RAU) resulting in further wireless backhaul signals (RF2, RF4) for transmission to the at least one central unit (CU).

6. A method according to claim 5, wherein the method further comprises transmitting the further wireless backhaul signals (RF2, RF4) and a part of the local oscillator signal (LO1, LO2) from the at least one radio access unit (RAU) to the at least one central unit (CU) via said at least one wireless backhaul connection, wherein said part of the local oscillator signal (LO1, LO2) and said further wireless backhaul signals (RF2, RF4) received via said at least one wireless backhaul connection are separated in the at least one central unit (CU), and the part of the local oscillator signal (LO1, LO2) is used for downconversion of the further wireless backhaul signals (RF2, RF4) in the at least one central unit (CU).

7. A central unit (CU) for wireless multiple-input multiple-output communication in a communication network comprising said central unit (CU) and at least one radio access unit (RAU) for wireless connection with at least one user terminal (UE4, UE5), wherein said central unit (CU) is adapted to
• provide at least one wireless backhaul connection to the at least one radio access unit (RAU), and
• establish different data links (RF1-RF4) between the central unit (CU) and the at least one user terminal (UE4, UE5) via the at least one radio access unit (RAU) for said wireless multiple-input multiple-output communication by transmitting wireless backhaul signals transmitted between the central unit (CU) and the at least one radio access unit (RAU) with different polarizations, wherein said wireless backhaul signals of the different data links (RF1-RF4) are transmitted between the at least one central unit (CU) and the at least one radio access unit (RAU) on identical carrier frequencies.

8. A radio access unit (RAU) for wireless multiple-input multiple-output communication in a communication network comprising at least one central unit (CU) and said radio access unit (RAU) for wireless connection with at least one user terminal (UE4, UE5), wherein said radio access unit (RAU) is adapted to
• provide at least one wireless backhaul connection to the at least one central unit (CU),
• and establish different data links (RF1-RF4) between the at least one central unit (CU) and the at least one user terminal (UE4, UE5) via the radio access unit (RAU) for said wireless multiple-input multiple-output communication by transmitting wireless backhaul signals between the at least one central unit (CU) and the radio access unit (RAU) with different polarizations, wherein said wireless backhaul signals of the different data links (RF1-RF4) are transmitted between the at least one central unit (CU) and the at least one radio access unit (RAU) on identical carrier frequencies.

## Patentansprüche

1. Verfahren zur drahtlosen Kommunikation mit mehreren Ein- und Ausgängen in einem Kommunikationsnetzwerk, das mindestens eine Zentraleinheit (CU) und mindestens eine Funkzugriffseinheit (RAU) zur drahtlosen Verbindung mit mindestens einem Benutzerendgerät (UE4, UE5) umfasst, wobei die mindestens eine Zentraleinheit (CU) mit der mindestens einen Funkzugriffseinheit (RAU) durch mindestens eine drahtlose Backhaul-Verbindung verbunden ist, wobei das Verfahren das Herstellen verschiedener Datenverbindungen (RF1-RF4) zwischen der mindestens einen Zentraleinheit (CU) und dem mindestens einen Benutzerendgerät (UE4, UE5) über die mindestens eine Funkzugriffseinheit (RAU) für die drahtlose Kommunikation mit mehreren Ein- und Ausgängen durch Übertragen von drahtlosen Backhaul-Signalen zwischen der mindestens einen Zentraleinheit (CU) und der mindestens einen Funkzugriffseinheit (RAU) mit unterschiedlichen Polarisationen umfasst, wobei die drahtlosen Backhaul-Signale der verschiedenen Datenverbindungen (RF1-RF4) zwischen der mindestens einen Zentraleinheit (CU) und der mindestens einen Funkzugriffseinheit (RAU) auf identischen Trägerfrequenzen übertragen werden.

2. Verfahren nach Anspruch 1, wobei
• die drahtlosen Backhaul-Signale der verschiedenen Datenverbindungen (RF1-RF4) zwischen der mindestens einen Zentraleinheit (CU) und der mindestens einen Funkzugriffseinheit (RAU) unter Verwendung gemeinsamer Antennen (A6, A8) übertragen werden,
• und das Verfahren ferner das Umschalten zwischen verschiedenen Antennen (A9, A11) zum Senden und zwischen verschiedenen Antennen (A9, A11) zum Empfangen der mindestens einen Funkzugriffseinheit (RAU) umfasst, die für die Zeitduplexverbindung der drahtlosen Verbindung mit dem mindestens einen Benutzerendgerät (UE4, UE5) verwendet wird.

3. Verfahren nach Anspruch 2, wobei ein Umschalten zwischen verschiedenen Antennen (A9, A11) zum Senden und zwischen verschiedenen Antennen (A9, A11) zum Empfangen der mindestens einen Funkzugriffseinheit (RAU), die für die Zeitduplexverbindung der drahtlosen Verbindung mit dem mindestens einen Benutzerendgerät (UE4, UE5) verwendet wird, von einem Zähler oder einem Timer abhängig ist.

4. Verfahren nach einem der vorhergehenden Ansprüche, wobei das Verfahren ferner umfasst:
• Übertragen eines lokalen Oszillatorsignals (LO1, LO2) und drahtloser Backhaul-Signale (RF1, RF3) von der mindestens einen Zentraleinheit (CU) an die mindestens eine Funkzugriffseinheit (RAU),
• Trennen des lokalen Oszillatorsignals (LO1, LO2) und der über die mindestens eine drahtlose Backhaul-Verbindung empfangenen drahtlosen Backhaul-Signale (RF1, RF3) in der mindestens einen Funkzugriffseinheit (RAU), und
• Verwenden des lokalen Oszillatorsignals (LO1, LO2) zum Abwärtswandeln der drahtlosen Backhaul-Signale (RF1, RF3) in der mindestens einen Funkzugriffseinheit (RAU).

5. Verfahren nach Anspruch 4, wobei das Verfahren ferner nach Trennung von den drahtlosen Backhaul-Signalen (RF1, RF3) das Aufteilen des lokalen Oszillatorsignals (LO1, LO2) und die Verwendung eines Teils des lokalen Oszillatorsignals (LO1, LO2) zur Aufwärtswandlung von drahtlosen Zugangssignalen umfasst, die von dem mindestens einen Benutzerendgerät (UE4, UE5) an die mindestens eine Funkzugriffseinheit (RAU) gesendet werden, was zu weiteren drahtlosen Backhaul-Signalen (RF2, RF4) zur Übertragung an die mindestens eine Zentraleinheit (CU) führt.

6. Verfahren nach Anspruch 5, wobei das Verfahren ferner das Übertragen der weiteren drahtlosen Backhaul-Signale (RF2, RF4) und eines Teils des lokalen Oszillatorsignals (LO1, LO2) von der mindestens einen Funkzugriffseinheit (RAU) an die mindestens eine Zentraleinheit (CU) über die mindestens eine drahtlose Backhaul-Verbindung umfasst, wobei der Teil des lokalen Oszillatorsignals (LO1, LO2) und die weiteren über die mindestens eine drahtlose Backhaul-Verbindung empfangenen drahtlosen Backhaul-Signale (RF2, RF4) in der mindestens einen Zentraleinheit (CU) getrennt werden und der Teil des lokalen Oszillatorsignals (LO1, LO2) zur Abwärtswandlung der weiteren drahtlosen Backhaul-Signale (RF2, RF4) in der mindestens einen Zentraleinheit (CU) verwendet wird.

7. Zentraleinheit (CU) für drahtlose Kommunikation mit mehreren Ein- und Ausgängen in einem Kommunikationsnetzwerk, umfassend die Zentraleinheit (CU) und mindestens eine Funkzugriffseinheit (RAU) für eine drahtlose Verbindung mit mindestens einem Benutzerendgerät (UE4, UE5), wobei die Zentraleinheit (CU) dazu eingerichtet ist,
• mindestens eine drahtlose Backhaul-Verbindung zu der mindestens einen Funkzugriffseinheit (RAU) bereitzustellen, und
• verschiedene Datenverbindungen (RF1-RF4) zwischen der Zentraleinheit (CU) und dem mindestens einen Benutzerendgerät (UE4, UE5) über die mindestens eine Funkzugriffseinheit (RAU) für die drahtlose Kommunikation mit mehreren Ein- und Ausgängen durch Übertragen von drahtlosen Backhaul-Signalen, die zwischen der Zentraleinheit (CU) und der mindestens einen Funkzugriffseinheit (RAU) mit unterschiedlichen Polarisierungen übertragen werden, herzustellen, wobei die drahtlosen Backhaul-Signale der verschiedenen Datenverbindungen (RF1-RF4) zwischen der mindestens einen Zentraleinheit (CU) und der mindestens einen Funkzugriffseinheit (RAU) auf identischen Trägerfrequenzen übertragen werden.

8. Funkzugriffseinheit (RAU) zur drahtlosen Kommunikation mit mehreren Ein- und Ausgängen in einem Kommunikationsnetzwerk, umfassend mindestens eine Zentraleinheit (CU) und die Funkzugriffseinheit (RAU) zur drahtlosen Verbindung mit mindestens einem Benutzerendgerät (UE4, UE5), wobei die Funkzugriffseinheit (RAU) dazu eingerichtet ist,
• mindestens eine drahtlose Backhaul-Verbindung zu der mindestens einen Zentraleinheit (CU) bereitzustellen,
• und verschiedene Datenverbindungen (RF1-RF4) zwischen der mindestens einen Zentraleinheit (CU) und dem mindestens einen Benutzerendgerät (UE4, UE5) über die Funkzugriffseinheit (RAU) für die drahtlose Kommunikation mit mehreren Ein- und Ausgängen durch Übertragen drahtloser Backhaul-Signale zwischen der mindestens einen Zentraleinheit (CU) und der Funkzugriffseinheit (RAU) mit unterschiedlichen Polarisationen herzustellen, wobei die drahtlosen Backhaul-Signale der verschiedenen Datenverbindungen (RF1-RF4) zwischen der mindestens einen Zentraleinheit (CU) und der mindestens einen Funkzugriffseinheit (RAU) auf identischen Trägerfrequenzen übertragen werden.

## Revendications

1. Procédé pour une communication sans fil à entrées multiples et sorties multiples dans un réseau de communication comprenant au moins une unité centrale (CU) et au moins une unité d'accès radio (RAU) pour une connexion sans fil avec au moins un terminal utilisateur (UE4, UE5), dans lequel la ou les unités centrales (CU) sont connectées à la ou aux unités d'accès radio (RAU) au moyen d'au moins une connexion de liaison terrestre sans fil, le procédé comprenant l'établissement de différentes liaisons de données (RF1 à RF4) entre la ou les unités centrales (CU) et le ou les terminaux utilisateurs (UE4, UE5) par le biais de la ou des unités d'accès radio (RAU) pour ladite communication sans fil à entrées multiples et sorties multiples en transmettant des signaux de liaison terrestre sans fil entre la ou les unités centrales (CU) et la ou les unités d'accès radio (RAU) avec des polarisations différentes, dans lequel lesdits signaux de liaison terrestre sans fil des différentes liaisons de données (RF1 à RF4) sont transmis entre la ou les unités centrales (CU) et la ou les unités d'accès radio (RAU) sur des fréquences porteuses identiques.

2. Procédé selon la revendication 1,
• lesdits signaux de liaison terrestre sans fil des différentes liaisons de données (RF1 à RF4) étant transmis entre la ou les unités centrales (CU) et la ou les unités d'accès radio (RAU) à l'aide d'antennes communes (A6, A8),
• et le procédé comprenant en outre la commutation entre différentes antennes (A9, A11) pour la transmission et entre différentes antennes (A9, A11) pour la réception de la ou des unités d'accès radio (RAU) utilisées pour un duplexage par répartition dans le temps de la connexion sans fil avec le ou les terminaux utilisateurs (UE4, UE5).

3. Procédé selon la revendication 2, dans lequel une commutation entre différentes antennes (A9, A11) pour la transmission et entre différentes antennes (A9, A11) pour la réception de la ou des unités d'accès radio (RAU) utilisées pour un duplexage par répartition dans le temps de la connexion sans fil avec le ou les terminaux utilisateurs (UE4, UE5) dépend d'un compteur ou d'un temporisateur.

4. Procédé selon l'une quelconque des revendications précédentes, le procédé comprenant en outre
• la transmission d'un signal d'oscillateur local (LO1, LO2) et de signaux de liaison terrestre sans fil (RF1, RF3) à partir de la ou des unités centrales (CU) à la ou aux unités d'accès radio (RAU),
• la séparation dudit signal d'oscillateur local (LO1, LO2) et des signaux de liaison terrestre sans fil (RF1, RF3) reçus par le biais de ladite ou desdites connexions de liaison terrestre sans fil dans la ou les unités d'accès radio (RAU) et
• l'utilisation du signal d'oscillateur local (LO1, LO2) pour une conversion descendante des signaux de liaison terrestre sans fil (RF1, RF3) dans la ou les unités d'accès radio (RAU).

5. Procédé selon la revendication 4, le procédé comprenant en outre, après la séparation des signaux de liaison terrestre sans fil (RF1, RF3), la division du signal d'oscillateur local (LO1, LO2) et l'utilisation d'une partie du signal d'oscillateur local (LO1, LO2) pour une conversion ascendante de signaux d'accès sans fil envoyés depuis le ou les terminaux utilisateurs (UE4, UE5) à la ou aux unités d'accès radio (RAU) résultant en des signaux de liaison terrestre sans fil supplémentaires (RF2, RF4) pour une transmission à la ou aux unités centrales (CU).

6. Procédé selon la revendication 5, le procédé comprenant en outre la transmission des signaux de liaison terrestre sans fil supplémentaires (RF2, RF4) et d'une partie du signal d'oscillateur local (LO1, LO2) à partir de la ou des unités d'accès radio (RAU) à la ou aux unités centrales (CU) par le biais de ladite ou desdites connexions de liaison terrestre sans fil, dans lequel ladite partie du signal d'oscillateur local (LO1, LO2) et lesdits signaux de liaison terrestre sans fil supplémentaires (RF2, RF4) reçus par le biais de ladite ou desdites connexions de liaison terrestre sans fil sont séparés dans la ou les unités centrales (CU), et la partie du signal d'oscillateur local (LO1, LO2) est utilisée pour une conversion descendante des signaux de liaison terrestre sans fil supplémentaires (RF2, RF4) dans la ou les unités centrales (CU).

7. Unité centrale (CU) pour une communication sans fil à entrées multiples et sorties multiples dans un réseau de communication comprenant ladite unité centrale (CU) et au moins une unité d'accès radio (RAU) pour une connexion sans fil avec au moins un terminal utilisateur (UE4, UE5), ladite unité centrale (CU) étant conçue
• pour fournir au moins une connexion de liaison terrestre sans fil à la ou aux unités d'accès radio (RAU) et
• pour établir différentes liaisons de données (RF1 à RF4) entre l'unité centrale (CU) et le ou les terminaux utilisateurs (UE4, UE5) par le biais de la ou des unités d'accès radio (RAU) pour ladite communication sans fil à entrées multiples et sorties multiples en transmettant des signaux de liaison terrestre sans fil transmis entre l'unité centrale (CU) et la ou les unités d'accès radio (RAU) avec des polarisations différentes, dans laquelle lesdits signaux de liaison terrestre sans fil des différentes liaisons de données (RF1 à RF4) sont transmis entre la ou les unités centrales (CU) et la ou les unités d'accès radio (RAU) sur des fréquences porteuses identiques.

8. Unité d'accès radio (RAU) pour une communication sans fil à entrées multiples et sorties multiples dans un réseau de communication comprenant au moins une unité centrale (CU) et ladite unité d'accès radio (RAU) pour une connexion sans fil avec au moins un terminal utilisateur (UE4, UE5), ladite unité d'accès radio (RAU) étant conçue
• pour fournir au moins une connexion de liaison terrestre sans fil à la ou aux unités centrales (CU),
• et pour établir différentes liaisons de données (RF1 à RF4) entre la ou les unités centrales (CU) et le ou les terminaux utilisateurs (UE4, UE5) par le biais de l'unité d'accès radio (RAU) pour ladite communication sans fil à entrées multiples et sorties multiples en transmettant des signaux de liaison terrestre sans fil entre la ou les unités centrales (CU) et l'unité d'accès radio (RAU) avec des polarisations différentes, dans laquelle lesdits signaux de liaison terrestre sans fil des différentes liaisons de données (RF1 à RF4) sont transmis entre la ou les unités centrales (CU) et la ou les unités d'accès radio (RAU) sur des fréquences porteuses identiques.
